# EUROPÄISCHE PATENTSCHRIFT

(11) **EP 3 810 449 B1**
(45) Veröffentlichungstag und Bekanntmachung des Hinweises auf die Patenterteilung: **16.11.2022**
(21) Anmeldenummer: 19732881.8
(22) Anmeldetag: 04.06.2019
(51) Int. Cl.: B60K 6/40, B60K 6/405, B60K 6/442, B60K 6/387

(54) **ANTRIEBSEINHEIT FÜR EINEN ANTRIEBSSTRANG EINES ELEKTRISCH ANTREIBBAREN KRAFTFAHRZEUGS UND ANTRIEBSANORDNUNG**
DRIVE UNIT FOR A DRIVE TRAIN OF AN ELECTRICALLY DRIVEN MOTOR VEHICLE AND DRIVE ASSEMBLY
UNITÉ D'ENTRAÎNEMENT POUR UNE CHAÎNE CINÉMATIQUE D'UN VÉHICULE AUTOMOBILE POUVANT ÊTRE ENTRAÎNÉ ÉLECTRIQUEMENT ET AGENCEMENT D'ENTRAÎNEMENT

(30) Priorität: 20.06.2018 DE 102018114794
(43) Veröffentlichungstag der Anmeldung: 28.04.2021
(73) Patentinhaber: Schaeffler Technologies AG & Co. KG, 91074 Herzogenaurach (DE)
(72) Erfinder: TRINKENSCHUH, Andreas, 77815 Bühl (DE); LEHMANN, Steffen, 76275 Ettlingen (DE)
(86) Internationale Anmeldenummer: PCT/DE2019/100496
(87) Internationale Veröffentlichungsnummer: WO 2019/242806

(56) Entgegenhaltungen:
- WO-A1-2010/095610
- DE-A1-102017 127 695
- DE-B4-112006 001 432

## Beschreibung

Die Erfindung betrifft eine Antriebseinheit für einen Antriebsstrang eines elektrisch antreibbaren Kraftfahrzeugs, insbesondere eines Hybridkraftfahrzeuges, sowie eine Antriebsanordnung.

Aus dem Stand der Technik sind Antriebseinrichtungen für ein Hybridfahrzeug bekannt, welche unter anderem eine Verbrennungskraftmaschine, eine erste elektrischen Maschine sowie eine zweite elektrische Maschine umfassen.

Die DE 10 2015 222 690 A1, DE 10 2015 222 691 A1 sowie in WO 2017 084 887 A1 beschreiben dazu Verfahren zum Steuern einer derartigen Antriebseinrichtung, wobei die Antriebseinrichtung in mehreren Betriebsmodi betreibbar ist.

In der DE 10 2015 222 690 A1 wird vorwiegend ein serieller Hybridbetrieb erläutert, in dem das Fahrantriebsdrehmoment mittels der zweiten Elektromaschine bewirkt wird und die Verbrennungskraftmaschine die erste Elektromaschine zur Erzeugung von elektrischer Energie antreibt. Beschrieben ist, wie die Verbrennungskraftmaschine an einem Arbeitspunkt basierend auf einem kombinierten Wirkungsgrad betrieben wird, der von dem Wirkungsgrad der Verbrennungskraftmaschine und von dem Wirkungsgrad der ersten Elektromaschine abhängt.

In den Dokumenten DE 10 2015 222 691 A1 und WO 2017 084 887 A1 werden ein leistungsorientierter sowie ein verbrauchsorientierter Modus beschrieben, wobei ein jeweiliger Modus von einer Bedingung abhängig ist. Diese Bedingung weist auf, dass ein Sollantriebswert auf einen Zwischenwert erhöht wird, der zwischen einer Verbrennungskraftmaschine-Schwelle, die einen maximalen Antriebswert in einem parallelen Hybridbetrieb repräsentiert, in dem ausschließlich die Verbrennungskraftmaschine ein Fahrantriebsdrehmoment bewirkt, und einer Parallelhybridbetrieb-Schwelle, die einen maximalen Antriebswert in dem parallelen Boost-Hybridbetrieb repräsentiert, liegt.

Die DE 10 2015 222 692 A1, WO 2017 084 888 A1, DE 10 2015 222 694 A1 sowie WO 2017 084 889 A1 beschreiben ein Verfahren zum Betreiben einer Antriebseinrichtung eines Hybridfahrzeugs zum Antreiben eines Antriebsrads, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst.

In der DE 10 2015 222 692 A1 sowie der WO 2017 084 888 A1 wird beschrieben, dass die Antriebseinrichtung in einem von drei Betriebsmodi betrieben wird. Einem rein elektrischen Betrieb, einem seriellen Hybridbetrieb oder einem parallelen Hybridbetrieb, wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht.

DE 10 2015 222 694 A1 und WO 2017 084 889 A1 offenbaren, dass zwischen der Verbrennungskraftmaschine und dem Antriebsrad weiterhin ein Getriebe umfasst ist. Das Verfahren weist hier auf:
- Betreiben der Verbrennungskraftmaschine bei einer ersten Drehzahl für den ersten Gang in einem parallelen Hybridbetrieb, während ein erster Gang des Getriebes eingelegt ist;
- Wechseln in einen seriellen Hybridbetrieb;
- Öffnen der Hauptkupplung;
- Einstellen einer Drehzahl der Verbrennungskraftmaschine bei geöffneter Hauptkupplung auf eine zweite Drehzahl für einen zweiten Gang des Getriebes in dem parallelen Hybridbetrieb;
- Einlegen des zweiten Ganges des Getriebes;
- Schließen der Hauptkupplung; und
- Wechseln in den parallelen Hybridbetrieb, während der zweite Gang eingelegt ist.

Aus der (noch nicht veröffentlichten) DE 10 2017 128 289.0 ist eine Antriebseinheit für einen Antriebsstrang eines Hybridkraftfahrzeuges bekannt, mit einer Verbrennungskraftmaschine, einer ersten elektrischen Maschine, einer zweiten elektrischen Maschine, einer ersten Übersetzungsstufe und einer Triebwelle der ersten elektrischen Maschine und/oder der zweiten elektrischen Maschine. Des Weiteren umfasst die Antriebseinheit eine Getriebeteileinheit, über die die Triebwelle der jeweiligen elektrischen Maschine mit Radantriebswellen gekoppelt oder koppelbar ist. Eine zweite Übersetzungsstufe ist mit einer Vorgelegeeinheit gekoppelt, wobei die Vorgelegeeinheit eine integrierte Kupplung aufweist und so mit den Radantriebswellen weiter verbunden ist, dass in Abhängigkeit der Stellung dieser Kupplung die Verbrennungskraftmaschine über die zweite Übersetzungsstufe mit den Radantriebswellen koppelbar ist.

Die ebenfalls noch nicht veröffentlichte DE 10 2017 127 695.5 lehrt einen Antriebsstrang für ein Hybridkraftfahrzeug, welcher eine Getriebeeingangswelle aufweist, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht. Die zweite elektrische Maschine ist dauerhaft mit der Getriebeeingangswelle drehmomentübertragend verbunden und die erste elektrische Maschine und die Verbrennungskraftmaschine sind koppelbar zur Drehmomentübertragung mit der Getriebeeingangswelle verbindbar. Dabei kann die erste elektrische Maschine und/oder die zweite elektrische Maschine gekühlt ausgeführt sein. Besonders ist es bevorzugt, wenn die Kühlung mittels einer Wasserkühlung aus einem Fahrzeug-Kühlkreis oder mittels einer Ölkühlung mit Getriebeöl aus dem Getriebe heraus ausgebildet ist. Weiterhin kann auch die eingesetzte Trennkupplung als eine ölgekühlte Lamellenkupplung ausgebildet sein.

Eine Hybridantriebseinheit mit zwei elektrischen Maschinen, deren Rotoren sich gegenseitig abstützen, ist aus der DE 11 2006 001 432 B4 bekannt.

Des Weiteren beschreibt ein jeweiliges genanntes Dokument ein Hybridfahrzeug, welches ein jeweiliges Verfahren ausführen kann, wobei sich der Aufbau des Hybridfahrzeugs im Wesentlichen für alle genannten Dokumente gleicht.

Das im Stand der Technik wiederholt beschriebene Hybridfahrzeug umfasst eine Verbrennungskraftmaschine, eine erste sowie zweite elektrische Maschine, zumindest ein Antriebsrad, eine Hauptkupplung, eine erste und eine zweite Kupplung. Die Hauptkupplung ist dabei zwischen der Verbrennungskraftmaschine und einem Antriebsrad umfasst, die erste Kupplung ist zwischen der ersten elektrischen Maschine und einer Ausgangswelle der Verbrennungskraftmaschine vorgesehen und die zweite Kupplung ist zwischen der zweiten elektrischen Maschine und einem Antriebsrad vorgesehen.

Es ist außerdem bekannt, dass elektrische Maschinen koaxial in einem Gehäuse angeordnet sind. Dabei ist eine elektrische Maschine bzw. deren Rotor beidseitig drehbar gelagert, wobei eine solche Lagerung vorzugsweise in einer Wand des Gehäuses realisiert ist.

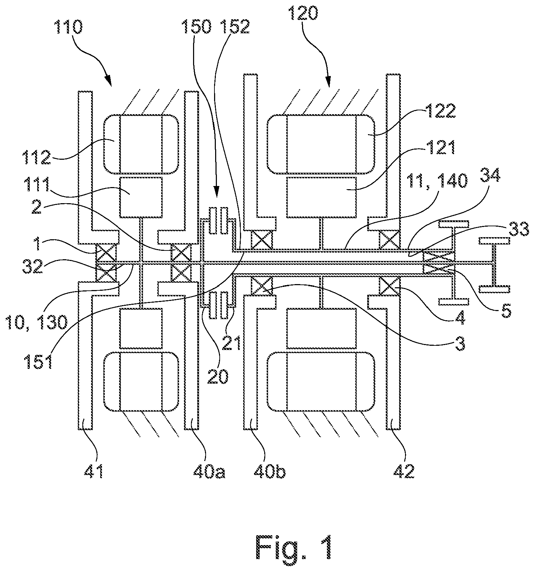

Eine aus dem Stand der Technik bekannte Anordnung zweier elektrischer Maschinen ist in Figur 1 dargestellt. Dabei zeigt Figur 1 eine schematische Darstellung einer Antriebseinheit.

In Figur 1 zu sehen sind eine erste elektrische Maschine 110 sowie eine zweite elektrische Maschine 120, die im Wesentlichen koaxial zueinander angeordnet sind, und eine Trennkupplung 150, die in axialer Richtung zwischen den beiden elektrischen Maschinen 110, 120 angeordnet ist.

Die erste elektrische Maschine 110 umfasst einen ersten Stator 112 sowie einen auf einem Rotorträger 10 der ersten elektrischen Maschine 110 gelagerten ersten Rotor 111, wobei der Rotorträger 10 hier eine erste Welle 130 ist. Beidseitig der ersten elektrischen Maschine 110 ist in axialer Richtung jeweils ein Gehäuseelement in Form eine Gehäusewand 41, 40a vorgesehen, nämlich auf der der Trennkupplung 150 abgewandten Seite eine äußere Gehäusewand 41 und auf der der Trennkupplung 150 zugewandten Seite eine innere Gehäusewand 40a. Die erste Welle 130 ist dabei über ein erstes Rotationslager 1 der ersten elektrischen Maschine 110 an der äußeren Gehäusewand 41 sowie über ein zweites Rotationslager 2 der ersten elektrischen Maschine 110 an der inneren Gehäusewand 40a gelagert, wobei diese Rotationslager 1, 2 auf der radialen Außenseite 30 der ersten Welle 130 angeordnet sind.

Die zweite elektrische Maschine 120 umfasst einen zweiten Stator 122 sowie einen auf einem Rotorträger 11 der zweiten elektrischen Maschine 120 gelagerten zweiten Rotor 121, wobei der Rotorträger 11 hier eine Ausgangswelle 140 ist. Der Raum, in dem die zweite elektrische Maschine 120 angeordnet ist, ist dabei in axialer Richtung beidseitig von jeweils einer Gehäusewand 40b, 42 begrenzt, nämlich auf der der Trennkupplung 150 abgewandten Seite von einer äußeren Gehäusewand 42 und auf der der Trennkupplung 150 zugewandten Seite von einer inneren Gehäusewand 40b. Die Ausgangswelle 140 ist dabei über ein erstes Rotationslager 3 der zweiten elektrischen Maschine 120 an der äußeren Gehäusewand 42 sowie über ein zweites Rotationslager 4 der zweiten elektrischen Maschine 120 an der inneren Gehäusewand 40b gelagert, wobei diese Rotationslager 3, 4 auf der radialen Außenseite 32 der Ausgangswelle 140 angeordnet sind.

Die Ausgangswelle 140 ist dabei als Hohlwelle ausgebildet, wobei die erste Welle 130 abschnittsweise radial innerhalb der Ausgangswelle 140 angeordnet. Weiterhin ist ein Rotationslager 5 der Ausgangswelle 140 auf der radialen Innenseite 31 der Ausgangswelle 140 und der radialen Außensite 32 der ersten Welle 130, somit zwischen der Ausgangswelle 140 und der ersten Welle 130, angeordnet.

Die Trennkupplung 150 ist zwischen der ersten Welle 130 und der Ausgangswelle 140 angeordnet, wobei ein Eingangselement 20 der Trennkupplung 150 mit der ersten Welle 130 verbunden ist und ein Ausganselement 21 der Trennkupplung 150 mit der Ausgangswelle 140 verbunden ist, wodurch bei geschlossener Trennkupplung 150 ein Drehmoment von der ersten Welle 130 auf die Ausgangswelle 140 übertragbar ist.

Der dargestellte Stand der Technik macht deutlich, dass eine derartige Lagerungsvariante mit relativ großem axialen Bauraumbedarf sowie hoherKomplexität des Gehäuses und Gehäusemasse verbunden ist.

Möglich ist es auch, den vorhergehend dargestellten Stand der Technik ohne Kupplung auszugestalten und derart folglich eine der inneren Gehäusewände einzusparen. Jedoch ist es in einer derartigen Ausgestaltung nicht möglich, einen Rotorträger der ersten elektrischen Maschine zumindest indirekt mit einem Rotorträger der zweiten elektrischen Maschine zu koppeln, wodurch die Antriebseinheit gesamtheitlich in ihrer Funktionsvielfalt gegenüber dem beschriebenen Stand der Technik eingeschränkt ist.

Hiervon ausgehend liegt der vorliegenden Erfindung die Aufgabe zugrunde, eine Antriebseinheit zur Verfügung zu stellen, die einen geringen Bauraumbedarf mit zuverlässiger und langlebiger Lagerung kombiniert.

Die Aufgabe wird durch die erfindungsgemäße Antriebseinheit nach Anspruch 1 gelöst. Vorteilhafte Ausgestaltungen der elektrischen Antriebseinheit sind in den Unteransprüchen 2 und 3 angegeben. Ergänzend wird eine Antriebsanordnung gemäß Anspruch 4 zur Verfügung gestellt.

Die Begriffe "axial" und "radial" beziehen sich im Rahmen der vorliegenden Erfindung immer auf die Rotationsachse der elektrischen Antriebseinheit.

Die Erfindung betrifft eine Antriebseinheit für einen Antriebsstrang eines elektrisch antreibbaren Kraftfahrzeugs, insbesondere eines Hybridkraftfahrzeuges, umfassend eine erste elektrische Maschine, eine zweite elektrische Maschine und eine Ausgangswelle auch als Getriebeeingangswelle bezeichnet, wobei ein Rotor der zweiten elektrischen Maschine drehfest mit der Ausgangswelle verbunden ist. Die Antriebseinheit weist weiterhin eine Trennkupplung auf, mit der ein Rotor der ersten elektrischen Maschine und damit eine an einer mit dem Rotor der ersten elektrischen Maschine drehfest verbundenen ersten Welle angeschlossene Verbrennungskraftmaschine zur Drehmomentübertragung mit der Ausgangswelle verbindbar oder verbunden ist. Es ist erfindungsgemäß vorgesehen, dass der Rotor einer der elektrischen Maschinen zumindest indirekt radial am Rotor der anderen elektrischen Maschine mittels wenigstens einem Rotationslager abgestützt ist.

Es ist dabei insbesondere vorgesehen, dass die beiden elektrischen Maschinen in Reihe angeordnet sind. In einer bevorzugten Ausgestaltung ist vorgesehen, dass die Rotoren der beiden elektrischen Maschinen bzw. deren Rotationsachsen koaxial angeordnet sind.

Die Trennkupplung ist eine schaltbare Kupplung, die von einem offenen Zustand in einen geschlossenen Zustand und umgekehrt geschaltet werden kann.

Die Antriebseinheit kann dabei derart ausgestaltet sein, dass die mit dem Rotor der ersten elektrischen Maschine fest verbundene erste Welle radial innerhalb der mit dem Rotor der zweiten elektrischen Maschine fest verbundenen Ausgangswelle angeordnet ist.

Die erste Welle kann dabei geteilt ausgeführt sein, nämlich in Form einer zentral verlaufenden Hohlwelle, auf der bereichsweise eine drehfest verbundene Nabe angeordnet ist, die wiederum drehfest mit dem Rotor der ersten elektrischen Maschine verbunden ist.

Die radiale Innenseite der Trennkupplung kann dabei drehfest mit der Nabe an der ersten elektrischen Maschine verbunden sein, und die radiale Außenseite der Trennkupplung kann mit der Ausgangswelle, die drehfest mit dem Rotor der zweiten elektrischen Maschine verbunden ist, verbunden sein.

Des Weiteren kann die Antriebseinheit ein Getriebe aufweisen, welches mit der auch als Getriebeeingangswelle bezeichneten Ausgangswelle der Antriebseinheit in Wirkverbindung steht, so dass ein von der Ausgangswelle zur Verfügung gestelltes Drehmoment bzw. die von der Ausgangswelle realisierte Drehbewegung über das Getriebe über- oder untersetzt an eine weitere Getriebeeinheit eines Kraftfahrzeugs geleitet werden kann, oder auch direkt auf Antriebsräder eines Kraftfahrzeuges geleitet werden kann.

Dieses Getriebe kann ein Differenzial-Getriebe umfassen oder als ein solches ausgestaltet sein.

Das Getriebe kann dabei ein erstes Zahnrad umfassen, was mit einer Außenverzahnung an der Ausgangswelle kämmt. Durch das erste Zahnrad wird somit eine zweite Übersetzungsstufe in der Antriebseinheit realisiert. Dieses erste Zahnrad kann dabei drehfest mit einer Vorlegewelle des Getriebes gekoppelt sein, deren Außenverzahnung wiederum mit einem Eingangs-Zahnrad eines Differenzial-Getriebes kämmt, wodurch eine dritte Übersetzungsstufe realisiert wird Gemäß einer vorteilhaften Ausführungsform stützt sich der Rotor der abstützenden elektrischen Maschine über seinen Rotorträger an einer Gehäusewand ab, wobei sich der Rotor der abgestütztenn elektrischen Maschine auf dem jeweiligen anderen Rotorträger radial abstützt.

Gemäß einer nicht von der Erfindung umfassten Ausführungsform ist ein Eingangselement der Trennkupplung drehfest mit dem Rotor der ersten elektrischen Maschine verbunden. Der Rotor der ersten elektrischen Maschine ist durch dieses Eingangselement der Trennkupplung auf der Ausgangswelle gelagert, mit der der Rotor der zweiten elektrischen Maschine drehfest verbunden ist.

Erfindungsgemäß ist ein Ausgangselement der Trennkupplung drehfest mit dem Rotor der zweiten elektrischen Maschine verbunden sein. Der Rotor der zweiten elektrischen Maschine ist durch dieses Ausgangselement der Trennkupplung auf der ersten Welle gelagert, mit der die erste elektrische Maschine drehfest verbunden ist.

Dabei ist die drehfest mit dem ersten Rotor verbundene Welle koaxial innerhalb einer als Hohlwelle ausgestalteten, drehfest mit dem zweiten Rotor verbundenen Ausgangswelle ausgeführt.

Der Rotor der elektrischen Maschine, der nicht auf dem Rotor der jeweils anderen elektrischen Maschinen gelagert ist, ist axial beidseitig im Gehäuse des Antriebssystems gelagert.

Eine nicht von der Erfindung umfasste Ausführungsform ist derart realisiert, dass zumindest ein Rotationslager zur Lagerung des Rotors der ersten elektrischen Maschine an der radialen Innenseite des Eingangselements der Trennkupplung und an der radialen Außenseite der Ausgangswelle, die drehfest mit dem Rotor der zweiten elektrischen Maschine verbunden ist, angeordnet ist.

Weiterhin sieht eine bevorzugte Ausführung vor, dass zumindest ein Rotationslager zur Lagerung des Rotors der zweiten elektrischen Maschine an der radialen Innenseite der hohl ausgestalteten Ausgangswelle und an der radialen Außenseite der mit dem Rotor der ersten elektrischen Maschine drehfest verbundenen ersten Welle angeordnet ist.

Beide Rotoren der beiden elektrischen Maschinen sind dabei koaxial zueinander angeordnet.

Erfindungsgemäß befindet sich zwischen den beiden elektrischen Maschinen in axialer Richtung lediglich eine innere Gehäusewand, an der lediglich ein Rotationslager für einen der beiden Rotoren der elektrischen Maschinen angeordnet ist.

Dabei soll nicht ausgeschlossen sein, dass das Rotationslager mehrere Maschinenelemente aufweist, die mehrere Lager ausbilden. Im Sinne der Erfindung ist unter dem hier erwähnten Rotationslager eine Lagereinheit zu verstehen.

In der nicht von der Erfindung umfassten Ausführungsform der Antriebseinheit, in der ein Eingangselement der Trennkupplung drehfest mit dem Rotor der ersten elektrischen Maschine verbunden ist und der Rotor der ersten elektrischen Maschine durch dieses Eingangselement der Trennkupplung auf der Ausgangswelle gelagert ist, ist vorgesehen, dass die Trennkupplung in axialer Richtung zwischen der ersten elektrischen Maschine und der inneren Gehäusewand angeordnet ist.

In der erfindungsgemäßen Ausführungsform, in der hingegen ein Ausgangselement der Trennkupplung drehfest mit dem Rotor der zweiten elektrischen Maschine verbunden ist und der Rotor der zweiten elektrischen Maschine durch dieses Ausgangselement der Trennkupplung auf der ersten Welle gelagert ist, ist vorgesehen, dass die Trennkupplung in axialer Richtung zwischen der inneren Gehäusewand und der zweiten elektrischen Maschine angeordnet ist.

Durch die verschachtelte Anordnung der Lagerungen der Rotoren der elektrischen Maschinen wird axialer Bauraum in Form einer Gehäusewand eingespart und dennoch eine Kopplung der Rotoren der beiden elektrischen Maschinen ermöglicht. E, Erfindungsgemäß kann somit eine Antriebseinheit für einen Antriebsstrang eines elektrisch antreibbaren Kraftfahrzeugs, insbesondere eines Hybridkraftfahrzeuges, zur Verfügung gestellt werden, die zwei miteinander gekoppelte elektrische Maschinen mit einer Verbrennungskraftmaschine verbindet.

Des Weiteren wird erfindungsgemäß eine Antriebsanordnung, zur Verfügung gestellt, die eine erfindungsgemäße Antriebseinheit sowie eine Verbrennungskraftmaschine aufweist, wobei die Verbrennungskraftmaschine drehfest mit dem Rotor der ersten elektrischen Maschine gekoppelt oder koppelbar ist.

Eine derartige Antriebsanordnung ist vorteilhafterweise derart ausgestaltet, dass zwischen der Verbrennungskraftmaschine und der ersten Welle, die mit dem Rotor der ersten elektrischen Maschine drehfest verbunden ist, eine erste Übersetzungsstufe angeordnet ist, zwecks Übersetzung der Drehzahl der von der Verbrennungskraftmaschine realisierten Drehbewegung auf die erste Welle.

Das Abtriebselement der Verbrennungskraftmaschine kann dabei eine Dämpfereinheit sein, oder auch eine Kupplung zum Öffnen und Schließen des Drehmoment-Übertragungspfades zwischen der Verbrennungskraftmaschine und der Antriebseinheit oder auch eine Kombination aus einer Dämpfereinheit und einer Kupplung.

Weiterhin kann das Abtriebselement als einen Bestandteil ein innenverzahntes Zahnrad aufweisen, welches mit einer Außenverzahnung der ersten Welle kämmt und somit die erste Übersetzungsstufe realisiert.

In weiterer Ausgestaltung umfasst die Antriebsanordnung auch wenigstens eine Radantriebswelle, die über das Getriebe mit der Ausgangswelle der Antriebseinheit verbunden ist, sodass eine von der Ausgangswelle realisierte Drehbewegung durch das Getriebe auf die Radantriebswelle übertragen werden kann.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: eine schematische Darstellung einer Antriebseinheit gemäß dem Stand der Technik,
- Fig. 2:: eine schematische Darstellung einer nicht erfindungsgemäßen Antriebseinheit gemäß einer ersten Variante,
- Fig. 3:: eine schematische Darstellung einer erfindungsgemäßen Antriebseinheit gemäß einer zweiten Variante,
- Fig. 4:: ein Ausschnitt einer nicht erfindungsgemäßen Antriebseinheit
- Fig. 5:: eine nicht erfindungsgemäße Antriebseinheit mit zwei elektrischen Maschinen

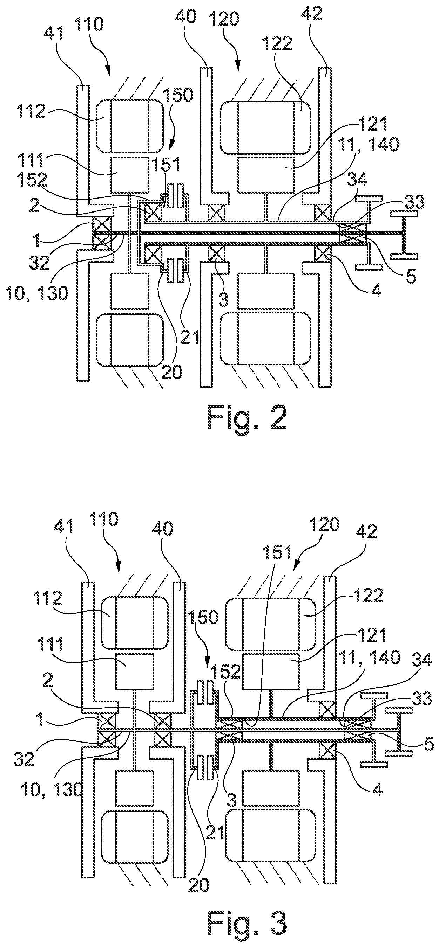

Eine Antriebseinheit 100, wie sie in den Figuren 2 bis 5 gezeigt ist umfasst eine erste elektrische Maschine 110 sowie eine zweite elektrische Maschine 120, die im Wesentlichen koaxial zueinander angeordnet sind, und eine Trennkupplung 150, die in axialer Richtung zwischen den beiden elektrischen Maschinen 110, 120 angeordnet ist.

Die elektrischen Maschinen 110, 120 umfassen jeweils auch hier einen Stator 112, 122 sowie einen auf einem Rotorträger 10, 11 gelagerten Rotor 111, 121. Die Räume, in denen die beiden elektrischen Maschinen 110,120 angeordnet sind, sind I in axialer Richtung beidseitig von jeweils einer Gehäusewand 40, 41, 42 begrenzt. Jeder elektrischen Maschine 110,120 sind jeweils axial beidseitig angeordnete Lagerungen 1,2,3,4,5 zugeordnet

Die Trennkupplung 150 ist zwischen der ersten Welle 130 und der Ausgangswelle 140 angeordnet, wobei ein Eingangselement 20 der Trennkupplung 150 mit der ersten Welle 130 verbunden ist und ein Ausganselement 21 der Trennkupplung 150 mit der Ausgangswelle 140 verbunden ist, wodurch bei geschlossener Trennkupplung 150 ein Drehmoment von der ersten Welle 130 auf die Ausgangswelle 140 übertragbar ist, und in umgekehrter Richtung.

In Figur 2 ist eine schematische Darstellung einer nicht erfindungsgemäßen Antriebseinheit gemäß einer ersten Variante dargestellt.

Identisch zu der aus dem Stand der Technik bekannten und in Figur 1 gezeigten Ausführungsform einer Antriebseinheit ist, dass der Raum, in dem die zweite elektrische Maschine 120 angeordnet ist, in axialer Richtung auf der der Trennkupplung 150 abgewandten Seite von einer äußeren Gehäusewand 42 und auf der der Trennkupplung 150 zugewandten Seite von einer inneren Gehäusewand 40 begrenzt ist.

Weiterhin ist der Rotorträger 10 der ersten elektrischen Maschine 110 eine erste Welle 130, wobei der Rotorträger 11 der zweiten elektrischen Maschine 120 eine Ausgangswelle 140 ist. Die Ausgangswelle 140 ist dabei als Hohlwelle ausgebildet, wobei die erste Welle 130 abschnittsweise radial innerhalb der Ausgangswelle 140 angeordnet ist.

Die Ausgangswelle 140 ist dabei über ein erstes Rotationslager 3 der zweiten elektrischen Maschine 120 an der äußeren Gehäusewand 42 sowie über ein zweites Rotationslager 4 der zweiten elektrischen Maschine 120 an der inneren Gehäusewand 40 gelagert, wobei diese Rotationslager 3, 4 auf der radialen Außenseite 32 der Ausgangswelle 140 angeordnet sind.

Weiterhin ist ein Rotationslager 5 der Ausgangswelle 140 auf der radialen Innenseite 31 der Ausgangswelle 140 und der radialen Außensite 32 der ersten Welle 130, somit zwischen der Ausgangswelle 140 und der ersten Welle 130, angeordnet.

Die gezeigte erste Variante der Antriebseinheit 100 unterscheidet sich im Wesentlichen durch die Lagerung der ersten elektrischen Maschine 110 sowie die Anordnung lediglich einer Gehäusewand 40 zwischen den beiden elektrischen Maschinen 110, 120 von der in Figur 1 dargestellten herkömmlichen Ausführungsform.

Der Raum, in dem die erste elektrische Maschine 110 angeordnet ist, ist zwar beidseitig von einer Gehäusewand 41, 40 begrenzt, jedoch ist die erste elektrische Maschine 110 nur auf einer der Trennkupplung 150 in axialer Richtung abgewandten Seite der ersten elektrischen Maschine 110 an der äußeren Gehäusewand 41 der ersten elektrischen Maschine 110 gelagert. Auf der axial gegenüberliegenden Seite ist die erste elektrische Maschine 110 hier durch ein mit ihr drehfest verbundenes Eingangselement 20 der Trennkupplung 150 auf der mit dem Rotor 121 der zweiten elektrischen Maschine 120 drehfest verbundenen Ausgangswelle 140 gelagert.

Die Lagerung an der der ersten elektrischen Maschine 110 zugeordneten äußeren Gehäusewand 41 ist durch ein erstes Rotationslager 1 der ersten elektrischen Maschine 110 und die Lagerung auf der Ausgangswelle 140 ist durch ein zweites Rotationslager 2 der ersten elektrischen Maschine 110 realisiert.

Das erste Rotationslager 1 der ersten elektrischen Maschine 110 ist dabei an der radialen Innenseite 151 des Eingangselements 20 der Trennkupplung 150 und an der radialen Außenseite 32 der Ausgangswelle 140, die drehfest mit dem Rotor 121 der zweiten elektrischen Maschine 120 verbunden ist, angeordnet.

Damit ist die Trennkupplung 150 in axialer Richtung zwischen der ersten elektrischen Maschine 110 und der inneren Gehäusewand 40 angeordnet.

Alternativ zu der in Figur 2 dargestellten Ausführungsform ist in Figur 3 eine schematische Darstellung einer erfindungsgemäßen Antriebseinheit gemäß einer zweiten Variante dargestellt.

Identisch zu der aus dem Stand der Technik bekannten und in Figur 1 gezeigten Ausführungsform einer Antriebseinheit ist, dass der Raum, in dem sich die erste elektrische Maschine 110 befindet, in axialer Richtung auf der der Trennkupplung 150 abgewandten Seite von einer äußeren Gehäusewand 41 und auf der der Trennkupplung 150 zugewandten Seite von einer inneren Gehäusewand 40 begrenzt ist.

Weiterhin ist der Rotorträger 10 der ersten elektrischen Maschine 110 eine erste Welle 130, wobei der Rotorträger 11 der zweiten elektrischen Maschine 120 eine Ausgangswelle 140 ist. Die Ausgangswelle 140 ist dabei als Hohlwelle ausgebildet, wobei die erste Welle 130 abschnittsweise radial innerhalb der Ausgangswelle 140 angeordnet ist.

Die erste Welle 130 ist dabei über ein erstes Rotationslager 1 der ersten elektrischen Maschine 110 an der äußeren Gehäusewand 41 sowie über ein zweites Rotationslager 2 der ersten elektrischen Maschine 110 an der inneren Gehäusewand 40 gelagert, wobei diese Rotationslager 1, 2 auf der radialen Außenseite 30 der ersten Welle 130 angeordnet sind.

Weiterhin ist ein Rotationslager 5 der Ausgangswelle 140 auf der radialen Innenseite 31 der Ausgangswelle 140 und der radialen Außensite 32 der ersten Welle 130, somit zwischen der Ausgangswelle 140 und der ersten Welle 130, angeordnet.

Die gezeigte zweite Variante der erfindungsgemäßen Antriebseinheit 100 unterscheidet sich im Wesentlichen durch die Lagerung der zweiten elektrischen Maschine 120 sowie die Anordnung lediglich einer Gehäusewand 40 zwischen den beiden elektrischen Maschinen 110, 120 von der in Figur 1 dargestellten herkömmlichen Ausführungsform.

Der Raum, in dem die zweite elektrische Maschine 120 untergebracht ist, ist zwar beidseitig von jeweils einer Gehäusewand 40, 42 begrenzt, jedoch nur auf einer der Trennkupplung 150 in axialer Richtung abgewandten Seite der zweiten elektrischen Maschine 120 an der äußeren Gehäusewand 42 gelagert. Auf der axial gegenüberliegenden Seite ist die zweite elektrische Maschine 120 durch ein mit ihr drehfest verbundenes Ausgangselement 21 der Trennkupplung 150 auf der ersten Welle 130 gelagert.

Die Lagerung an der äußeren Gehäusewand 42 ist durch ein zweites Rotationslager 4 der zweiten elektrischen Maschine 120 und die Lagerung auf der ersten Welle 130 ist durch ein erstes Rotationslager 3 der zweiten elektrischen Maschine 120 realisiert.

Das erste Rotationslager 3 der zweiten elektrischen Maschine 120 ist dabei an der radialen Innenseite 151 der hohl ausgestalteten Ausgangswelle 140 und an der radialen Außenseite 30 der mit dem Rotor 111 der ersten elektrischen Maschine 110 drehfest verbundenen ersten Welle 130, angeordnet.

Damit ist die Trennkupplung 150 in axialer Richtung zwischen der inneren Gehäusewand 40 und der zweiten elektrischen Maschine 120 angeordnet.

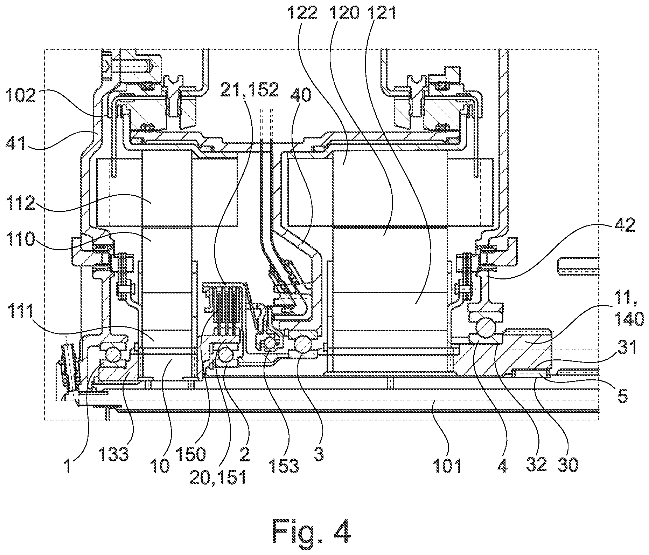

Figur 4 zeigt einen Ausschnitt einer nicht erfindungsgemäßen Antriebseinheit 100, wobei die in Figur 4 dargestellte Antriebseinheit 100 im Wesentlichen der entspricht, die schematisch in Figur 2 dargestellt ist. Der Aufbau der in Figur 4 gezeigten Antriebseinheit 100 ist somit im Wesentlichen äquivalent zu der zu Figur 2 erläuterten nicht erfindungsgemäßen Ausführung der Antriebseinheit 100.

Des Weiteren ist die Rotationsachse 101, um welche die rotierenden Elemente der Antriebseinheit 100 rotieren, ersichtlich.

Es ist hier dargestellt, dass die erste Welle 130 geteilt ausgeführt ist, nämlich in Form einer zentral verlaufenden Hohlwelle 132, auf der eine drehfest verbundene Nabe 133 angeordnet ist.

Der Rotorträger 10 der ersten elektrischen Maschine 110 ist hier durch die von der ersten Welle 130 umfasste Nabe 133 realisiert, welche auf der radialen Außenseite 30 der zentral verlaufenden Hohlwelle 132 angeordnet ist. Die Lagerung der ersten elektrischen Maschine 110 ist dabei ebenfalls zwischen der Nabe 133 und der äußeren Gehäusewand 41 sowie zwischen einem von der Nabe 133 umfassten Eingangselement 20 der Trennkupplung 150 und der Ausganswelle 140 ausgeführt. Die äußeren Gehäusewände 41, 42 und die innere Gehäusewand 40 sind dabei Bestandteile des Gehäuses 102.

Die hier dargestellte Trennkupplung 150 ist dabei mit ihrer radialen Innenseite 151 mit der ersten Welle 130 bzw. der Nabe 133 und mit ihrer radialen Außenseite 152 mit der Ausgangswelle 140 verbunden. Des Weiteren ist ein Betätigungselement 153 zum Betätigen der Trennkupplung 150 im Wesentlichen axial zwischen der Trennkupplung 150 und der inneren Gehäusewand 40 dargestellt.

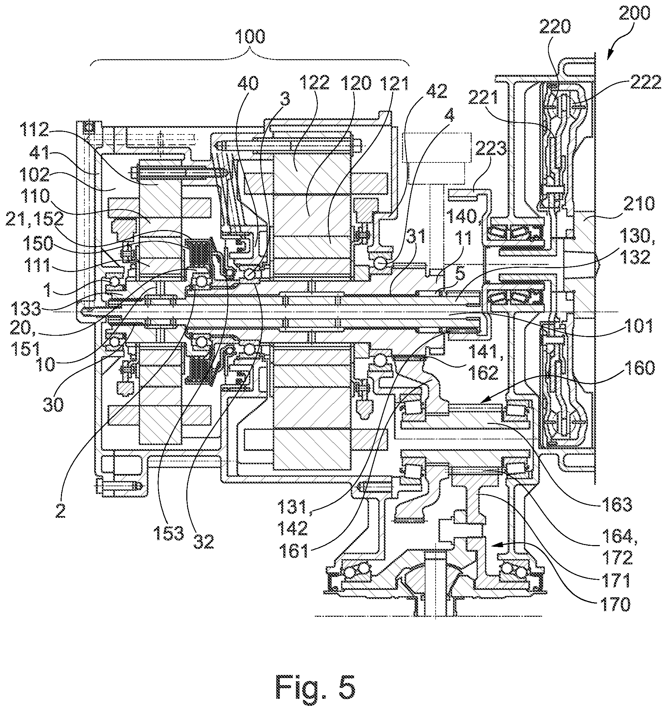

In Figur 5 ist eine nicht erfindungsgemäße Antriebseinheit 100 für einen Antriebsstrang eines elektrisch antreibbaren Kraftfahrzeugs, insbesondere eines Hybridkraftfahrzeuges, dargestellt, die eine erste elektrischen Maschine 110 sowie eine zweite elektrischen Maschine 120 aufweist, die beide auf einer gemeinsamen Rotationsachse 101 angeordnet sind. Der Rotor 111 der ersten elektrischen Maschine 110 ist dabei koaxial zur Rotationsachse 101 sowie auch zum Rotor 121 der zweiten elektrischen Maschine 120 angeordnet.

Der Stator 112 der ersten elektrischen Maschine 110 sowie auch der Stator 122 der zweiten elektrischen Maschine 120 ist von einem Gehäuse 102 der Antriebseinheit 100 aufgenommen.

Der Rotor 111 der ersten elektrischen Maschine ist drehfest mit einer ersten Welle 130 verbunden.

Der Rotor 121 der zweiten elektrischen Maschine 120 ist drehfest mit einer Ausgangswelle 140 verbunden, die auch als Getriebeeingangswelle bezeichnet werden kann.

Die in Figur 5 dargestellte Antriebseinheit 100 ist dabei im Wesentlichen entsprechend der in Figur 4 dargestellten nicht erfindungsgemäßen Antriebseinheit 100 ausgebildet

Demnach ist die erste elektrische Maschine 110 mittels dem ersten Rotationslager 1 der ersten elektrischen Maschine 110 an der äußeren Gehäusewand 41 der ersten elektrischen Maschine 110 sowie mittels dem zweiten Rotationslager 2 der ersten elektrischen Maschine 110 durch das mit der ersten elektrischen Maschine 110 verbundene Eingangselement 20 der Trennkupplung 150 auf der mit dem Rotor 121 der zweiten elektrischen Maschine 120 drehfest verbundenen hohl ausgestalteten Ausgangswelle 140 gelagert. Die zweite elektrische Maschine 120 ist durch ein erstes Rotationslager 3 der zweiten elektrischen Maschine 120 an der inneren Gehäusewand 40 des Gehäuses 102 und durch ein zweites Rotationslager 4 der zweiten elektrischen Maschine 120 an der äußeren Gehäusewand 42 der zweiten elektrischen Maschine 120 gelagert. Die Trennkupplung 150 ist hier in axialer Richtung zwischen der ersten elektrischen Maschine 110 und der inneren Gehäusewand 40 angeordnet.

Weiterhin umfasst die Antriebseinheit 100 eine Trennkupplung 150, mit der die erste elektrische Maschine 110 und damit eine an der mit dem Rotor 111 der ersten elektrischen Maschine 110 drehfest verbundenen erste Welle 130 angeschlossene Verbrennungskraftmaschine zur Drehmomentübertragung mit der Ausgangswelle verbindbar oder verbunden ist.

In der hier dargestellten Ausführungsform ist die erste Welle 130 zweiteilig ausgeführt, nämlich aus einer zentral verlaufenden Hohlwelle 132 sowie einer auf dieser Hohlwelle 132 positionierten und mit dieser drehfest verbundenen Nabe 133, wobei die Nabe 133 wiederum fest mit dem Rotor 111 der ersten elektrischen Maschine 110 verbunden ist.

Die Nabe 133 bildet die radiale Innenseite 151 der Trennkupplung 150 aus, bzw. ist mit dieser Eingangsseite der Trennkupplung 150 fest verbunden.

Die radiale Außenseite 152 der Trennkupplung 150, die die Ausgangsseite der Trennkupplung 150 realisiert, ist drehfest mit der Ausgangswelle 140 verbunden.

Die Trennkupplung 150 ist eine schaltbare Kupplung, die von einem offenen Zustand in einen geschlossenen Zustand und umgekehrt geschaltet werden kann. Zu diesem Zweck ist der Trennkupplung 150 ein Betätigungssystem 153 zugeordnet.

Derart kann bei Schließung der Trennkupplung 150 ein Drehmoment von der ersten Welle 130 auf die Ausgangswelle 140 oder auch umgekehrt übertragen werden.

In der hier dargestellten Ausführungsform ist somit vorgesehen, dass die beiden elektrischen Maschinen 110,120 in Reihe angeordnet sind, wobei die Rotoren 111,121 der beiden elektrischen Maschinen 110,120 bzw. deren Rotationsachsen koaxial angeordnet sind.

Dabei verläuft die erste Welle 130 bzw. deren zentral verlaufende Hohlwelle 132 radial innerhalb der Ausgangswelle 140, wodurch insgesamt das benötigte Bauvolumen der Antriebseinheit 100 gering gestaltet werden kann.

Des Weiteren umfasst die hier dargestellte Antriebseinheit 100 ein Getriebe 160, welches mit der auch als Getriebeeingangswelle bezeichneten Ausgangswelle 140 der Antriebseinheit 100 in Wirkverbindung steht, so dass ein von der Ausgangswelle 140 zur Verfügung gestelltes Drehmoment bzw. die von der Ausgangswelle 140 realisierte Drehbewegung über das Getriebe 160 über- oder untersetzt an eine weitere Getriebeeinheit eines Kraftfahrzeugs geleitet werden kann, oder auch direkt auf Antriebsräder eines Kraftfahrzeuges geleitet werden kann.

Dieses Getriebe 160 umfasst in der hier dargestellten Ausführungsform ein Differenzial-Getriebe 170.

Des Weiteren umfasst das Getriebe 160 ein erstes Zahnrad 161, was mit einer Außenverzahnung 141 an der Ausgangswelle 140 kämmt. Durch das erste Zahnrad 161 wird somit eine zweite Übersetzungsstufe 162 in der Antriebseinheit 100 realisiert. Dieses erste Zahnrad 161 ist dabei drehfest mit einer Vorlegewelle 163 des Getriebes 160 gekoppelt, deren Außenverzahnung 164 wiederum mit einem Eingangs-Zahnrad 171 des Differenzial-Getriebes 170 kämmt, wodurch eine dritte Übersetzungsstufe 172 realisiert wird.

Die Antriebseinheit 100 ist dabei Bestandteil einer ebenfalls dargestellten Ausführungsform einer Antriebsanordnung 200

Diese Antriebsanordnung 200 weist zusätzlich eine hier nicht dargestellte Verbrennungskraftmaschine auf, die im an den gezeigten Anschluss 210 angeschlossen Zustand, über die erste Welle 130 drehfest mit dem Rotor 111 der ersten elektrischen Maschine 110 gekoppelt oder - bei Zwischenschaltung einer weiteren Kupplung - koppelbar ist.

Die dargestellte Antriebsanordnung 200 ist derart ausgestaltet, dass zwischen dem Anschluss 210 für eine hier nicht dargestellte Verbrennungskraftmaschine und der ersten Welle 130, die mit dem Rotor 111 der ersten elektrischen Maschine 110 drehfest verbunden ist, eine erste Übersetzungsstufe 142 ausgebildet ist zwecks Übersetzung der Drehzahl der von der Verbrennungskraftmaschine bzw. deren Anschlusses 210 realisierten Drehbewegung auf die erste Welle 130.

Zu diesem Zweck ist ein Abtriebselement 220 der Verbrennungskraftmaschine vorgesehen, welches eine Dämpfereinheit 221 aufweisen kann oder auch eine Kupplung 222 zum Öffnen und Schließen des Drehmoment-Übertragungspfades zwischen der Verbrennungskraftmaschine und der Antriebseinheit 100, oder auch eine gezeigte Kombination aus einer Dämpfereinheit 221 und einer Kupplung 222.

Weiterhin umfasst das Abtriebselement 220 als einen Bestandteil ein innenverzahntes Zahnrad 223, welches mit einer Außenverzahnung 131 der ersten Welle 130 kämmt und somit eine erste Übersetzungsstufe 142 realisiert.

Es ist ersichtlich, dass in dem hier dargestellten Ausführungsbeispiel eine Drehachse des Abtriebselements 220 lateral versetzt ist zur Rotationsachse 101 der Antriebseinheit 100.

Derart kann eine von der hier nicht dargestellten Verbrennungskraftmaschine erzeugte Drehbewegung über das Abtriebselement 220 und die erste Übersetzungsstufe 142 auf die erste Welle 130 geleitet werden, sodass der darauf befindliche Rotor 111 der ersten elektrischen Maschine 110 in Drehbewegung versetzt werden kann, um als Generator betrieben zu werden.

Bei Schließung der Trennkupplung 150 kann die anliegende Drehbewegung von der ersten Welle 130, gegebenenfalls verstärkt von einem elektromotorischen Antrieb durch die erste elektrische Maschine 110, auf die Ausgangswelle 140 übertragen werden. Aufgrund der drehfesten Verbindung des Rotors 122 der zweiten elektrischen Maschine 120 mit der Ausgangswelle 140 kann ebenfalls ein von der zweiten elektrischen Maschine 120 zur Verfügung gestelltes Drehmoment zusätzlich auf die Ausgangswelle 140 aufgebracht werden.

Alternativ kann bei Öffnung der Trennkupplung 150 auch nur die zweite elektrische Maschine 120 alleine betrieben werden, um die Ausgangswelle 140 zu drehen.

Die Drehbewegung der Ausgangswelle 140 wird über deren Außenverzahnung 141 auf das erste Zahnrad 161 des angeschlossenen Getriebes 160 geleitet, wobei die zweite Übersetzungsstufe 162 realisiert wird.

Vom ersten Zahnrad 161 wird das Drehmoment bzw. die Drehbewegung auf die Vorlegewelle 163 geleitet, von der es über das Eingangs-Zahnrad 171 des Differenzial-Getriebes 170 diesem zugeleitet wird.

Vom Differenzial-Getriebe 170 wird das Drehmoment hier nicht dargestellten Radantriebs-Wellen zugeleitet, oder auch bei Bedarf einen weiteren Getriebe zur Über- bzw. Untersetzung des Drehmoments bzw. der Drehzahl.

Mit der dargestellten Antriebsanordnung 200 lassen sich unterschiedlichste Fahrzustände realisieren, wie zum Beispiel der Betrieb der Verbrennungskraftmaschine alleine zum Antrieb eines Kraftfahrzeugs, oder auch unter Hinzuschaltung der zweiten elektrischen Maschine 120 und/oder der ersten elektrischen Maschine 110, sowie ein gleichzeitiger Generatorbetrieb der ersten elektrischen Maschine 110 beim Betrieb der Verbrennungskraftmaschine und/oder der zweiten elektrischen Maschine 120, sowie ein alleiniger Betrieb der zweiten elektrischen Maschine 120, oder auch ein Rekuperationsbetrieb der ersten elektrischen Maschine 110 und/oder der zweiten elektrischen Maschine 120.

Mit der Ausgestaltung der hier vorgeschlagenen Antriebseinheit wird eine Einrichtung zur Verfügung gestellt, die einen geringen Bauraumbedarf mit zuverlässiger und langlebiger Lagerung kombiniert.

### Bezugszeichenliste

- 1: erstes Rotationslager der ersten elektrischen Maschine
- 2: zweites Rotationslager der ersten elektrischen Maschine
- 3: erstes Rotationslager der zweiten elektrischen Maschine
- 4: zweites Rotationslager der zweiten elektrischen Maschine
- 5: Rotationslager der Ausgangswelle
- 10: Rotorträger der ersten elektrischen Maschine
- 11: Rotorträger der zweiten elektrischen Maschine
- 20: Eingangselement der Trennkupplung
- 21: Ausgangselement der Trennkupplung
- 30: radiale Außenseite der ersten Welle
- 31: radiale Innenseite der Ausgangswelle
- 32: radiale Außenseite der Ausgangswelle
- 40: innere Gehäusewand
- 40a: innere Gehäusewand an der ersten elektrischen Maschine
- 40b: innere Gehäusewand an der zweiten elektrischen Maschine
- 41: äußere Gehäusewand an der ersten elektrischen Maschine
- 42: äußere Gehäusewand an der zweiten elektrischen Maschine
- 100: Antriebseinheit
- 101: Rotationsachse
- 102: Gehäuse der Antriebseinheit
- 110: erste elektrische Maschine
- 111: Rotor der ersten elektrischen Maschine
- 112: Stator der ersten elektrischen Maschine
- 120: zweite elektrische Maschine
- 121: Rotor der zweiten elektrischen Maschine
- 122: Stator der zweiten elektrischen Maschine
- 130: erste Welle
- 131: Außenverzahnung der ersten Welle
- 132: zentral verlaufende Hohlwelle
- 133: Nabe

- 140: Ausgangswelle
- 141: Außenverzahnung der Ausgangswelle
- 142: erste Übersetzungsstufe
- 150: Trennkupplung
- 151: radiale Innenseite der Trennkupplung
- 152: radiale Außenseite der Trennkupplung
- 153: Betätigungssystem
- 160: Getriebe
- 161: erstes Zahnrad
- 162: zweite Übersetzungsstufe
- 163: Vorlegewelle
- 164: Außenverzahnung der Vorlegewelle
- 170: Differenzial-Getriebe
- 171: Eingangs-Zahnrad
- 172: dritte Übersetzungsstufe
- 200: Antriebsanordnung
- 210: Anschluss für eine Verbrennungskraftmaschine
- 220: Abtriebselement
- 221: Dämpfereinheit
- 222: Kupplung
- 223: innenverzahntes Zahnrad

## Patentansprüche

1. Antriebseinheit (100) für einen Antriebsstrang eines elektrisch antreibbaren Kraftfahrzeugs, insbesondere eines Hybridkraftfahrzeuges, mit einer ersten elektrischen Maschine (110) sowie einer zweiten elektrischen Maschine (120) und einer Ausgangswelle (140), wobei ein Rotor (121) der zweiten elektrischen Maschine (120) drehfest mit der Ausgangswelle (140) verbunden ist und wobei die Antriebseinheit (100) weiterhin eine Trennkupplung (150) aufweist, mit der ein Rotor (111) der ersten elektrischen Maschine (110) zur Drehmomentübertragung mit der Ausgangswelle (140) verbindbar ist, wobei der Rotor (111, 121) einer der elektrischen Maschinen (110, 120) zumindest indirekt radial am Rotor (121, 111) der anderen elektrischen Maschine (120, 110) mittels wenigstens einem Rotationslager (3) abgestützt ist, wobei ein Ausgangselement (21) der Trennkupplung (150) drehfest mit dem Rotor (121) der zweiten elektrischen Maschine (120) verbunden ist, wobei der Rotor (121) der zweiten elektrischen Maschine (120) durch dieses Ausgangselement (21) der Trennkupplung (150) auf der mit der ersten elektrischen Maschine (110) drehfest verbundenen ersten Welle (130) gelagert ist, und wobei sich zwischen den beiden elektrischen Maschinen (110, 120) in axialer Richtung lediglich eine innere Gehäusewand (40) befindet, an der lediglich ein weiteres Rotationslager (2) für einen der beiden Rotoren (111, 121) der elektrischen Maschinen (110, 120) angeordnet ist, **dadurch gekennzeichnet, dass** die Trennkupplung (150) in axialer Richtung zwischen der inneren Gehäusewand (40) und der zweiten elektrischen Maschine (120) angeordnet ist.

2. Antriebseinheit (100) nach Anspruch 1,
**dadurch gekennzeichnet,**
**dass** sich der Rotor (111, 121) der abstützenden elektrischen Maschine (110, 120) über seinen Rotorträger (10, 11) an einer Gehäusewand (102) abstützt, und dass sich der Rotor (111, 121) der abgestützten elektrischen Maschine (110, 120) auf dem anderen Rotorträger (11, 10) radial abstützt.

3. Antriebseinheit (100) nach einem der vorherigen Ansprüche,
**dadurch gekennzeichnet,**
**dass** zumindest das wenigstens eine Rotationslager (3) zur Lagerung des Rotors (121) der zweiten elektrischen Maschine (120) an der radialen Innenseite (31) der hohl ausgestalteten Ausgangswelle (140) und an der radialen Außenseite (30) der mit dem Rotor (111) der ersten elektrischen Maschine (110) drehfest verbundenen ersten Welle (130) angeordnet ist.

4. Antriebsanordnung mit einer Antriebseinheit (100) gemäß einem der Ansprüche 1 bis 3 sowie mit einer Verbrennungskraftmaschine, die drehfest mit dem Rotor (121) der ersten elektrischen Maschine (110) gekoppelt oder koppelbar ist.

## Claims

1. A drive unit (100) for a drive train of an electrically driven motor vehicle, in particular a hybrid motor vehicle, having a first electric machine (110) and a second electric machine (120) and an output shaft (140), wherein a rotor (121) of the second electric machine (120) is connected to the output shaft (140) for conjoint rotation and wherein the drive unit (100) also has a disconnect clutch (150), with which a rotor (111) of the first electric machine (110) can be connected to the output shaft (140) for torque transmission, wherein the rotor (111, 121) of one of the electric machines (110, 120) is supported at least indirectly radially on the rotor (121, 111) of the other electric machine (120, 110) by means of at least one rotary bearing (3), wherein an output element (21) of the disconnect clutch (150) is connected for conjoint rotation to the rotor (121) of the second electric machine (120), wherein the rotor (121) of the second electric machine (120) is supported by this output element (21) of the disconnect clutch (150) on the first shaft (130) which is connected for conjoint rotation to the first electric machine (110), and wherein between the two electric machines (110, 120) there is only one inner housing wall (40) in the axial direction, on which only one further rotary bearing (2) for one of the two rotors (111, 121) of the electric machines (110, 120) is arranged, **characterised in that** the disconnect clutch (150) is arranged in the axial direction between the inner housing wall (40) and the second electric machine (120).

2. The drive unit (100) according to claim 1,
**characterised in that**
the rotor (111, 121) of the supporting electric machine (110, 120) is supported on a housing wall (102) via its rotor support (10, 11), and that the rotor (111, 121) of the supported electric machine (110, 120) is supported radially on the other rotor support (11, 10).

3. The drive unit (100) according to one of the preceding claims,
**characterised in that**
at least the at least one rotary bearing (3) for mounting the rotor (121) of the second electric machine (120) is arranged on the radial inside (31) of the hollow-designed output shaft (140) and is arranged on the radial outside (30) of the first shaft (130) which is connected for conjoint rotation to the rotor (111) of the first electric machine (110).

4. A drive assembly having a drive unit (100) according to one of claims 1 to 3 and having an internal combustion engine, which is coupled or can be coupled for conjoint rotation to the rotor (121) of the first electric machine (110).

## Revendications

1. Unité d'entraînement (100) pour une chaîne cinématique d'un véhicule automobile pouvant être entraîné électriquement, singulièrement d'un véhicule automobile hybride, avec une premier moteur électrique (110) ainsi qu'un deuxième moteur électrique (120) et un arbre de sortie (140), un rotor (121) du deuxième moteur électrique (120) étant solidaire en rotation de l'arbre de sortie (140), l'unité d'entraînement (100) comportant par ailleurs un embrayage de séparation (150) avec lequel un rotor (111) du premier moteur électrique (110) peut être relié à l'arbre de sortie (140) pour la transmission du couple, le rotor (111, 121) d'un des moteurs électriques (110, 120) étant soutenu de manière radiale au moins indirectement sur le rotor (121, 111) de l'autre moteur électrique (120, 110) au moyen d'au moins un palier de rotation (3), un élément de sortie (21) de l'embrayage de séparation (150) étant solidaire en rotation avec le rotor (121) du deuxième moteur électrique (120), le rotor (121) du deuxième moteur électrique (120) étant supporté sur le premier arbre (130) solidaire en rotation du premier moteur électrique (110) par cet élément de sortie (21) de l'embrayage de séparation (150) et seulement une paroi interne du boîtier (40) se trouvant dans le sens axial entre les deux moteurs électriques (110, 120) et sur laquelle est disposé seulement un autre palier de rotation (2) pour un des deux rotors (111, 121) des moteurs électriques (110, 120), **caractérisée en ce que** l'embrayage de séparation (150) est disposé dans le sens axial entre la paroi interne du boîtier (40) et le deuxième moteur électrique (120).

2. Unité d'entraînement (100) selon la revendication 1,
**caractérisée en ce que**
le rotor (111, 121) du moteur électrique support (110, 120) s'appuie contre une paroi du boîtier (102) par le biais de son porte-rotor (10, 11) et **en ce que** le rotor (111, 121) du moteur électrique soutenu (110, 120) s'appuie sur l'autre porte-rotor (11, 10) dans le sens radial.

3. Unité d'entraînement (100) selon l'une quelconque des revendications précédentes,
**caractérisée en ce que**
au moins l'au moins un palier de rotation (3) servant à soutenir le rotor (121) du deuxième moteur électrique (120) est disposé contre la paroi interne radiale (31) de l'arbre de sortie (140) réalisé de manière creuse et contre la paroi externe radiale (30) du premier arbre (130) solidaire en rotation du rotor (111) du premier moteur électrique (110).

4. Agencement d'entraînement avec une unité d'entraînement (100) selon l'une quelconque des revendications 1 à 3 ainsi qu'avec un moteur thermique, lequel est couplé ou peut être couplé de manière solidaire en rotation au rotor (121) du premier moteur électrique (110).
